# EUROPEAN PATENT APPLICATION

(11) **EP 2 849 083 A1**
(43) Date of publication of application: **18.03.2015**
(21) Application number: 13787236.2
(22) Date of filing: 07.05.2013
(51) Int. Cl.: G06F 17/00

(54) **METHOD AND SYSTEM FOR CONVERTING PULSED-PROCESSING NEURAL NETWORK WITH INSTANTANEOUS INTEGRATION SYNAPSES INTO DYNAMIC INTEGRATION SYNAPSES**

(30) Priority: 10.05.2012 ES 201230702
(71) Applicant: Consejo Superior De Investigaciones Científicas (CSIC), 28006 Madrid (ES)
(72) Inventor: SERRANO GOTARREDONA, Teresa, E-41092 Sevilla (ES); LINARES BARRANCO, Bernabé, E-41092 Sevilla (ES)
(74) Representative: Pons Ariño, Angel
(86) International application number: PCT/ES2013/070285
(87) International publication number: WO 2013/167780

(57) **Abstract**

The invention solves the technical problem associated with finding a way of making contributions as if using dynamic synapses, but using the simplest neural circuits possible, such as with instantaneous integration synapses. In this way, each neuron would be capable of making the correct decision, thereby allowing correct recognition on the part of the neural network. For this purpose, each input pulse is replaced with a train of "r" pulses and the "weight" value is attenuated by a value in the vicinity of "r". The "r" pulses are spaced apart for a characteristic time. The spacing of the "r" pulses may or may not be equidistant. Consequently, if a front of simultaneous pulses arrives at the neuron, originating from multiple neurons in the preceding layer, the trains of pulses are interleaved with one another and they all contribute to the decision of the neuron as to whether or not it should be activated.

## Description

### FIELD OF THE INVENTION

The present invention relates to the field of electronic circuits, particularly integrated pulsed-processing circuits that emulate the neurological processing of biological neurons.

### STATE OF THE ART

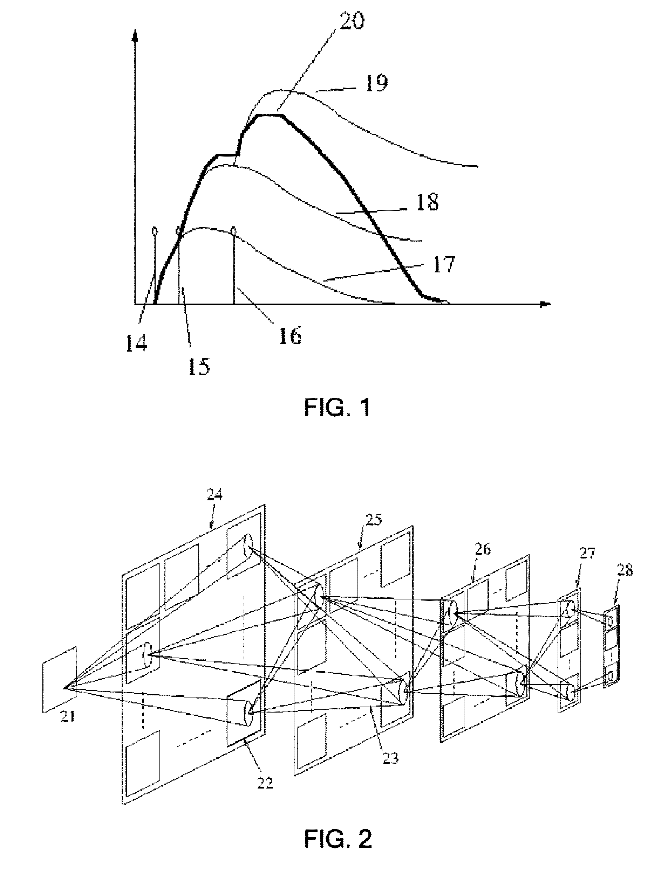

In computational neuroscience, algorithms that mimic neural processing to perform some type of high-level function, such as the automatic object recognition in computer vision are studied. In these systems it is very common to use dynamic synapses. By using dynamic synapses, the effect that a nervous impulse from one neuron has on another is such that the internal status of the latter evolves in a manner similar to that indicated in Fig. 1.

Each input pulse (14, 15 and 16) alters the status of the destination neuron, such that an initial area that increases to a certain speed is added, followed by a discharge at a slower speed. For example, the first input pulse (14) causes a transition (17) in the status of the neuron. The contributions of the successive pulses (15 and 16) added the corresponding contributions (18 and 19), giving rise to a total contribution (20) that is the sum of the parts (17, 18 and 19). Therefore, the impulse effect continues for a period of a few milliseconds. This is quite conventional in the current status of computational neuroscience, as described in: W. Gerstner, "Spiking Neurons," Ch 1 in Pulsed Neural Networks, W. Maass and CM Bishop (Eds.), MIT Press, Cambridge MA, 1999.

When neural network-based computer vision systems are designed for object recognition, hierarchical structures are commonly used, such as for example that shown in Figure 2 of the type called "Convolutional Neural Networks": Y. LeCun, L. Bottou, Y. Bengio, and P.Haffner. "Gradient-based learning applied to document recognition," Proceedings of the IEEE, vol. 86, pp. 2278-2324, November 1998.

In these networks, the vision sensor (21) sends information to the first processing layer (24). This first layer extracts very simple features from small areas of the field of vision. For example, it is very usual to use an array of Gabor filters, each of which identifies short "segments" at different orientations and scales. Therefore, each of the filters (22) of the first layer would activate those pixels where a small segment (of several pixels in length and thickness, depending on the scale) having a certain orientation is centred. These filters (such as 22), present in all the layers, are referred to as "feature map". Each neuron in a feature map sends its pulses to "projective fields" (23) in feature maps of the destination layers. Thus, the information is transmitted to the feature maps of the next layer, which groups segments to identify "traces". The next layer (26) groups "traces" to form and recognise more complex figures, and so on until recognising objects, regardless of their size and orientation.

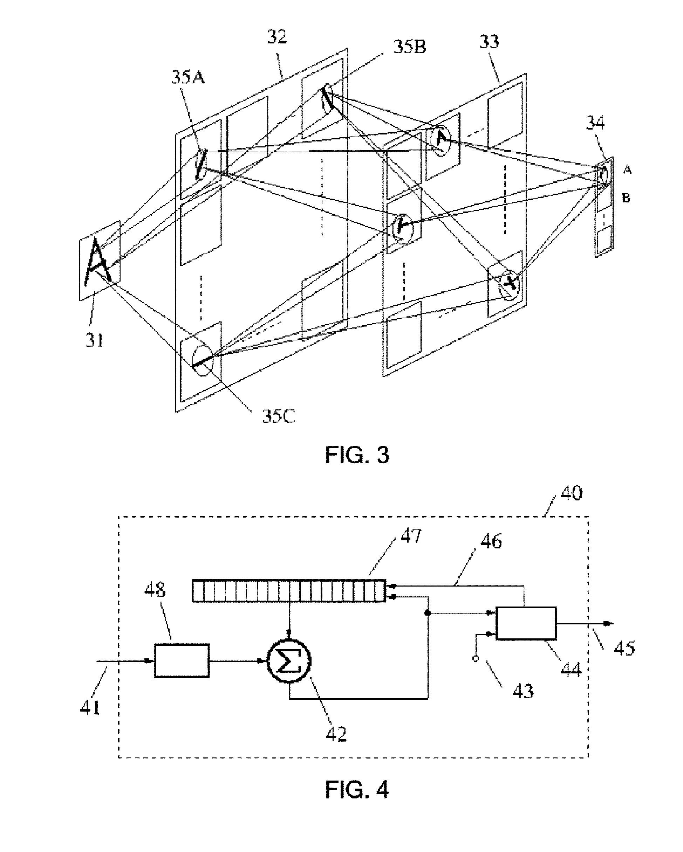

In a visual sensing and pulsed-processing system, such as biological systems, each pixel (or neuron) in a layer receives information from neighborhoods of the preceding layer. This is illustrated in Fig. 3.

For example, if the letter "A" is present at input, the pixels that detect oriented segments (35A, 35B, 35C) are activated in the first layer (32). The second layer (33) would identify, for example, characteristic intersections between segments. And the third layer (34) would group the latter to identify the letter "A" or rule out others by sending negative or inhibitory pulses. Throughout this process, each pixel (or neuron) in a layer receives successive pulses, both positive and negative, from various neighborhoods of the preceding layers and must decide whether or not to identify the presence of the feature that said pixel (neuron) defines. Thus, if the letter "A" is presented as a flash, the visual sensor sends a small number of electrical impulses from the pixels that detected the "A". The pixels (neurons) of the following layers will receive positive and negative pulses from neighborhoods of pixels from the preceding layer that determine whether the feature to be detected by said neuron is present or not. For a neuron to determine whether the feature it represents is present or not, it must fulfil the contribution of a sure number of positive and negative pulses of the preceding layer. In order to prevent the first pulses arriving at the neuron from inducing the neuron to make an erroneous decision, nature uses the method described in Fig. 1, which corresponds to a dynamic integration synapses behaviour. That is, every time a pulse is received, the status of the neuron grows first (for example, in biological neurons this time is usually a few milliseconds) until reaching a maximum and then relaxes, returning to its idle state. If the pulse received is positive its status increases and decreases if negative. Therefore, when the neuron receives a wave of pulses scattered over a few milliseconds, its contributions will be added and subtracted as indicated in Fig 1. This allows each neuron to take into account the contribution of a large number of pulses arriving in a time window of a few milliseconds, without making a hasty decision based solely on the first pulses to arrive.

This type of mathematical modelling is commonly used among computational neuroscience researchers who develop software programs that emulate neuronal processes, such as W. Gerstner, "Spiking Neurons," Ch 1 in Pulsed Neural Networks, W. Maass and CM Bishop (Eds.), MIT Press, Cambridge MA, 1999; Masquelier, T., and Thorpe, SJ (2007). Unsupervised learning of visual features through spike timing-dependent plasticity. PLoS Comput. Biol 3, e31.Masquelier, T., Guyonneau, R., and Thorpe, SJ (2008). Spike timing dependent plasticity finds the start of repeating patterns in continuous spike trains. PLoS ONE 3 el377 and, Masquelier, T., and Thorpe, SJ (2010). "Learning to recognise objects using waves of spikes and spike timing-dependent plasticity," in Proc. of the 2010 IEEE Int Joint Conf on Neural Networks, Barcelona.

However, in embodiments of hardware circuits it is very complex and expensive to create neural circuits with dynamic synapses that respond in the manner indicated in Fig.1. In embodiments of circuits, given the intention to integrate many thousands or millions of neurons in a single microchip, it is essential to simplify each neuron to a maximum. Consequently it is very usual, in a digital embodiment, to use very simple neurons such as that indicated in Figure 4, that perform an instantaneous synaptic integration method, i.e. without dynamic synapses.

Figure 4 shows a digital embodiment of a neuron circuit. Every time the neuron (40) receives an input pulse (41), "weight" (48) is added to a n bit register (47) which represents the "status" of the neuron. The "weight" to be added depends on the neuron from which the input pulse stems, and can be stored in a local memory shared by all the neurons. This is the case, for example, in L. Camus-Mesa, C.Zamarreño-Ramos, A. Linares-Barranco, A. Acosta-Jimenez, T. Serrano-Gotarredona, and B. Linares-Barranco, "An Event-Driven Multi-Processor Convolution Kernel Module for Event-Driven Vision Sensors," IEEE J. of Solid-State Circuits, vol. 47, No. 2, pp. 504-517, Feb. 2012 or L. Camus-Mesa, A.Acosta-Jiménez, C. Zamarreño-Ramos, T. Serrano-Gotarredona, and B.Linares-Barranco, "A 32x32 Pixel Convolution Processor Chip for Address Event Vision Sensors with 155ns Event Latency and Throughput 20Meps," IEEE Trans. Circ. and Syst. Part-I, vol. 58, No. 4, pp. 777-790, April 2011. As input pulses arrive, weights are added or subtracted (depending on whether the pulses are positive or negative). To this end, an adder/subtractor circuit (42) is used. The status of the neuron is compared at each instant with a "threshold" value (43) by means of a comparator circuit (44). When the status exceeds the "threshold", the register is reset by a "reset" signal (46) to a rest value and the neuron sends an output pulse (45).

In the event of using "Convolutional Neural Networks" (as in Figures 2 and 3) with "AER" (Address Event Representation) hardware modules, the instantaneous synaptic integration devices would comprise a multitude of feature map extractor blocks. In turn, each feature map extractor block of the state of the art consists of two blocks: an Event Router block and a Neuron Array block. The Neuron Array block is the one that contains an array of digital circuits such as that shown in Figure 4, where the "weights" representing the "status" of the neuron are programmed according to the needs of each embodiment.

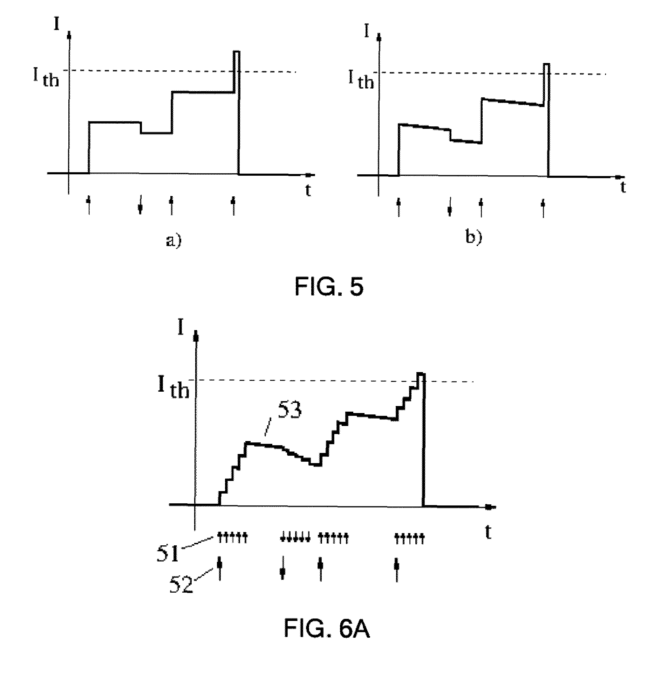

Fig. 5a) shows the evolution over time of the status of the neuron when it receives positive and negative input pulses (performing instantaneous synaptic integration) until reaching the threshold and sending its own output pulse. Since each neuron must detect whether it receives a series of features within a time window, it is desirable to provide it with a mechanism to download its status, as shown in Figure 5b). This can be done, for example, by periodically sending all the neurons faint negative pulses. This is done, for example, by means of event-driven convolution processor filters (pulses) in digital embodiments such as those described in L. Camus-Mesa, C. Zamarreño-Ramos, A. Linares-Barranco, A. Acosta-Jimenez, T. Serrano-Gotarredona, and B. Linares-Barranco, "An Event-Driven Multi-Processor Convolution Kernel Module for Event-Driven Vision Sensors," IEEE J. of Solid-State Circuits, vol. 47, No. 2, pp. 504-517, Feb. 2012 or L. Camus-Mesa, A. Acosta-iménez, C Zamarreño-Ramos, T. Serrano-Gotarredona, and B. Linares-Barranco, "A 32x32 Pixel Convolution Processor Chip for Address Event Vision Sensors with 155ns Event Latency and Throughput 20Meps," IEEE Trans. Circ. and Syst. Part-I, vol. 58, No. 4, pp. 777-790, April 2011.

However, the method shown in Figures 4 and 5 is such that the contribution of each input pulse is instantaneous (i.e. it is an instantaneous synaptic method), as opposed to how the contribution was made in Figure 1 (i.e. by means of a dynamic synaptic method). Therefore, the neurons do not wait to calculate the total contribution of all the events that would arrive in a time window. On the contrary, if a few positive pulses arrive causing the status of the neuron to reach the threshold (Iₜₕ), the neuron will make the decision to activate itself, even if many negative pulses were to arrive immediately afterwards. The result of performing the pulse contributions in this instantaneous manner is that the neurons make erroneous decisions and lose their ability to recognise the neural network.

Therefore, the technical problem posed in the state of the art is to find a way to make contributions as if dynamic synapses were used, but using the simplest possible neural circuits, as in the case of instantaneous integration synapses. Therefore, each neuron would be able to make the correct decision and would allow proper recognition by the neural network.

### DESCRIPTION OF THE INVENTION

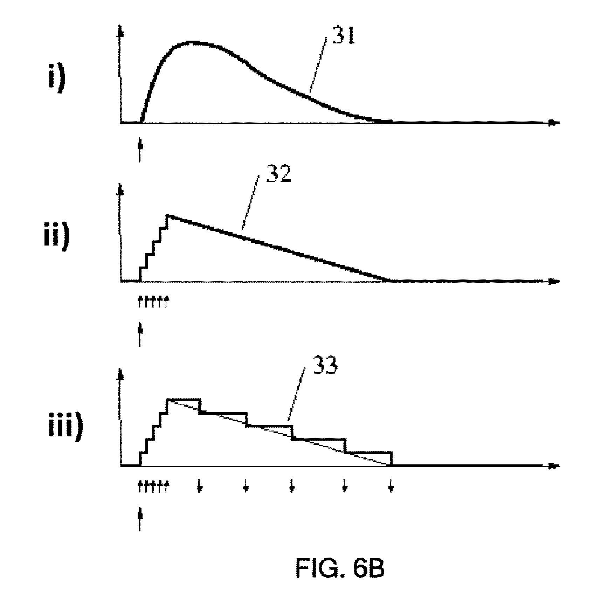

The present invention solves the technical problem addressed on the basis of Fig. 5b), i.e. a neuron in a resting state with an instantaneous synaptic integration method. Fig. 6 shows the effect of the present invention on the input pulses received at neuron input. Each input pulse (52) is replaced by a train of "r" pulses (51) and the "weight" value (i.e. the effect of the pulse) is also attenuated by a value in the vicinity of "r". The "r" pulses are spaced for a characteristic time. This characteristic time is a few milliseconds in biological neurons, but in an application of, for example, computer vision, this time would be adapted to the nature and speed of the visual reality under observation. The spacing of the "r" pulses may or may not be equidistant. Therefore, if a front of simultaneous pulses from various neurons of the preceding layer (in a millisecond time window) were to arrive at the neuron, this would allow the pulse trains to become interleaved and all the pulses would contribute to the decision of the neuron as to whether or not it should be activated.

Consequently, dynamic synapses behaviour (non-instantaneous) is thus emulated and the neurons do not make a hasty decision based on the first arriving pulses. On the contrary, by allowing the interleaving of weaker pulse trains, it is possible to agree on the contribution from a larger number of neurons that send their impulses during the same milliseconds. The result achieved is the emulation of the biological behaviour of the dynamic synapses described in Fig. 1 without need to complicate the internal circuitry of the chip neurons, which continue being simple circuits that perform instantaneous synaptic integration, as the shown in Fig. 4.

The present invention solves the technical problem addressed by distributing the effect of the instantaneous contribution of an input pulse to an artificial neuron over a longer time interval.

To this end, in a first aspect of the present invention, an Event Scheduler block for converting a pulsed-processing neural network with instantaneous synapses into dynamic integration synapses is described. As mentioned earlier, there are neural networks in the prior art consisting of an Event Router block and a Neuron Array block interconnected to form an instantaneous synaptic integration device, wherein the Event Router receives a stream of pulses or events at input events entering a stream of pulses or events Ei from a source module.

The novel Event Scheduler block is disposed between the source module and the Event Router block. Depending on the embodiment of the invention, the Event Scheduler block may be included within the feature map extractor (comprised in the instantaneous synaptic integration device) or constitute a separate entity. In a preferred embodiment, the novel Event Scheduler block comprises: i) a memory module; ii) an Output Event Arbiter; iii) a finite state machine (FSM) comprising a pointer register, wherein the finite state machine writes the "p" parameters of the event to the memory module received in a "t" instant to be sent to the Output Event Arbiter in "r" future time instants; and iv) an Input Event Manager that directly sends the event to the Output Event Arbiter and, simultaneously, to the finite state machine, so that the Output Event Arbiter generates a signal arising from the arbitration [(i.e. when two events are simultaneous (that from input and that from reading the memory module), since they can only be sent to the next stage one by one, it is necessary to use an Arbiter to resolve the conflict. The Arbiter makes one wait while sending the other, and then sends the one waiting)] of each input event or pulse and the event or pulse retrieved from the finite state machine, the signal being sent to the Neuron Array block, where it is attenuated by a factor in the vicinity of "r", via the Event Router block.

The Event Scheduler block of the present invention forms part of a processing system for Address Event Representation (AER). The converter device of the present invention, as described in the preceding paragraph, is capable of repeating in the time "r" times the contribution of a neural impulse in event- or pulse-driven processing systems.

In the preferred embodiment of the invention, the Finite State Machine (FSM) comprises a pointer register whose index points to a memory module position, increasing the index by one position after an At time increment of time units.

Likewise, and for the aforementioned preferred embodiment of the invention, the memory module is a circular register of Q records comprising a predetermined number of Q positions, each of which comprises a "busy" bit and capacity for storing the "p" parameters of the event. The finite state machine, prior to writing the "p" parameters of the event in "r" positions of the memory module, each of which will be chosen to be read at a tₜ+tₙ instant, detects whether the "busy" bit is activated, in which case the "p" parameters of the event will be written in the next or previous memory module whose "busy" bit is deactivated; otherwise, the "p" event parameters are written in the position of the memory module that will be read at the t,+tₙ instant and the "busy" bit of that memory position is activated. The finite state machine for the "t" time instant reads the "p" parameters of the event comprised in the position of the memory module pointed to by the index of the pointer register if the "busy" bit is activated, deactivates said "busy" bit and sends said "p" parameters to the Output Event Arbiter.

The Event Scheduler block of the present invention has an effect on the weights of the events that arrive at the Neuron Array block. In order to compensate the effect of the Event Scheduler block of the present invention, it is necessary to reprogram the weights in the Neuron Array block so that the effect of replacing each original event by a finite number "r" of events is equivalent.

Therefore, a second aspect of the invention is a feature map extractor connectable at input to a source module from which it receives pulses or events Ei. The novel feature map extractor comprises a conventional Event block. The feature map extractor of the present invention is characterised in that it additionally comprises the Event Scheduler block of the present invention and a modified Neuron Array block. The Neuron Array block is rescheduled in order for the effect of replacing each original event by a finite number "r" of events is equivalent. That is, the weights are weakened such that the effect of replacing each original event by a finite number "r" from the Event Scheduler block is equivalent.

In a third aspect of the present invention, a method for converting pulsed-processing neural network with instantaneous integration synapses into dynamic integration synapses is described. Therefore, the method of the present invention allows dynamic integration synapses behaviour using circuits whose behaviour is instantaneous synapses. The method consists of repeating the contribution of a neural pulse over time in event- or pulse-driven processing systems, causing the contribution of repeated events to be weaker than the original.

The method of the present invention comprises, for each input pulse or event Ei received in an instant "t" in an Address Event Representation (AER) processing system, repeating each pulse or event Ei in the future "r" instants while the effect of each pulse or event Ei is attenuated in the destination module (destination block).

The method for converting a pulsed-processing neural network with instantaneous integration synapses into dynamic integration synapses of the present invention comprises the following steps:
i) for each input event or pulse received at an instant "t", store the values of their "p" parameters associated with each event or pulse to be retrieved in a finite number "r" of future instants t,+tₙ (n=l, 2, ... r);
ii) for each input event or pulse received, additionally send the event or pulse to its destination (regardless of the storage process of the preceding step);
iii) the parameters of the event or pulse received to "r" positions of a memory module; the positions of this memory module are read one by one at a constant speed; the "r" positions in the memory module will be selected depending on the future instants ti+tₙ in which the "r" repetitions of the event or pulse are to be retrieved;
iv) retrieve, in a time-controlled manner, the "p" parameters of the event or pulse in the finite number "r" of future instants, wherein the time intervals are fixed or variable;
v) extract the event in one of the future "r" instants (where applicable), arbitrate [(i.e. when two events are simultaneous (that from input and that from reading the memory module), as they can only be sent to the following stage one by one, it is necessary to use an Arbiter to resolve the conflict. The Arbiter makes one of the events wait while it sends the other and then sends the waiting event)], by means of an Arbiter, the dispatch of the event retrieved from the memory by sending a new event being received (if it is being received) at the same instant of time ti; and
vi) weakening the weights in the destination module, reprogramming it with the values of the weakened weights, so that the effect of replacing each original event by a finite number "r" of events is equivalent.

In the preferred embodiment of the invention relating to the method and in accordance with the preferred embodiment of the invention relating to the system formed by the Event Scheduler and Feature Map Extractor, both of the present invention, each input pulse or event Ei received in an instant "t" in an Address Event Representation (AER) processing system is repeated in "r" future instants while the effect of said pulse or event Ei is attenuated by the Neuron Array. In step i), the Input Event Manager receives input pulses or events Ei, each of which arrives in its time t, instant. In step ii), each input pulse or event Ei received in its arrival instant t is sent directly to the Output Event Arbiter which, upon arbitrating it with the stored pulses or events that can be sent by the FSM, will send it to the Output Event Arbiter output. In step iii), for each input event E, the finite state machine (FSM) will write its "p" parameters to the "r" memory positions of the memory module to be read in future instants t,+tₙ (n=l, 2, ... r). If a memory location has its "busy" bit activated, the event will be written in the nearest previous or next position whose "busy" bit is deactivated. In step iv), the FSM reads, with time steps At, the consecutive positions of the memory module. If its "busy" bit is activated, it is deactivated, the "p" parameters of the stored event are extracted (and optionally deleted) and sent to the Output Event Arbiter. In step v), the Output Event Arbiter will arbitrate the events from the FSM with the events from the Input Event Manager that may coincide in time. In step vi), in the destination module, which is the Neuron Array block, the weights must be attenuated by a factor in the vicinity of "r". This is performed by reprogramming the weights comprised in the Neuron Array.

In a fourth aspect of the invention, the neuron status discharge mechanism can be suppressed until reaching a resting state, if an additional "r2" repetitions subsequent to the event are added to the train of "r" repetitions of the input event by changing the polarity of the event in said "r2" repetitions. To this end, the Event Scheduler of the present invention comprises that the finite state machine "FSM" (4) writes the "p" parameters of the event (changing its polarity) to the memory module, to be sent to the Output Event Arbiter in future "r2" time instants subsequent to the "r" time instants. This is detailed in Figure 6B. At the top (Fig. 6Bi)), the evolution of the status (31) of a neuron receiving a pulse through a dynamic synapse is shown, as explained in Fig. 1. In the centre (Fig. 6Bii)), the method indicated thus far is shown, wherein in an embodiment with instantaneous synapses and neurons with a discharge mechanism each input pulse is replaced by a train of weaker "r" pulses. The evolution (32) of the status of the neuron is thus obtained. At the bottom (Fig. 6Biii)), a neuron without a discharge mechanism with instantaneous synapses would be used, wherein the input pulse is replaced by two consecutive trains. A first train of "r" pulses, as before, plus a second train of "r2" pulses of opposite polarity that end up taking the status of the neuron to its resting state.

### BRIEF DESCRIPTION OF THE FIGURES

Figure 1 shows the evolution of the internal status of a neuron due to the effect of a train of nerve impulses from other neurons with dynamic synapses.
Figure 2 shows hierarchical neural structures in designs of neuro-computer vision systems.
Figure 3 shows a visual sensing and pulsed-processing system, such as biological impulses, wherein each pixel or neuron in a layer receives information from the neighborhoods of the preceding layer.
Figure 4 shows a digital implementation of a simple neuron circuit that performs a simple instantaneous synaptic integration method, i.e. without dynamic synapses. Figure 5a) shows the time evolution of the status of the neuron, when it receives positive and negative input pulses (performing instantaneous synaptic integration) until reaching the threshold and sending its own output pulse.
Figure 5b) shows a discharge mechanism of the status of a neuron to detect whether a neuron receives a series of features within a time window.
Figure 6A) shows the effect of the present invention on the input pulses received by the neuron.
Figure 6Bi) shows the evolution of the status of a neuron receiving a pulse through dynamic synapses.
Figure 6Bii) shows the method indicated thus far wherein in one embodiment with instantaneous synapses and neurons with discharge mechanism, each input pulse is replaced by a train of weaker "r" pulses.

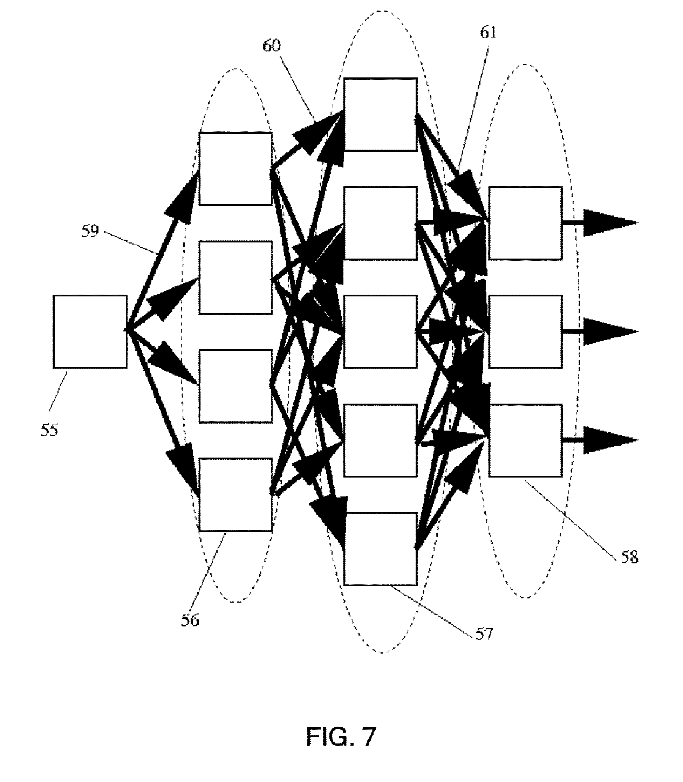

Figure 6Biii) shows a neuron that has no mechanism with instant download synapses, wherein the input pulse is replaced by two consecutive trains. Figure 7 shows an event-driven sensing and processing system and, more specifically, a diagram of an Address Event Representation (AER) system.

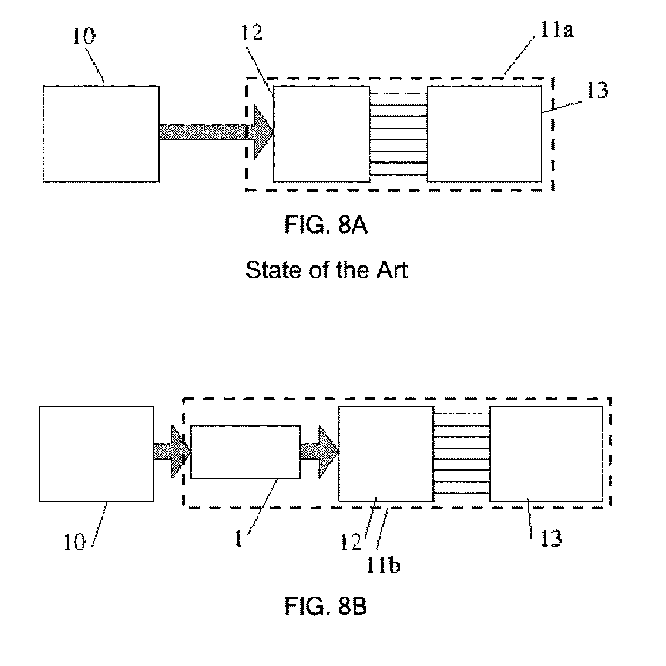

Figure 8A shows a typical internal structure of a feature map extractor module in AER systems containing two blocks.
Figure 8B shows the internal structure of a feature map extractor module in AER systems modified by the present invention.

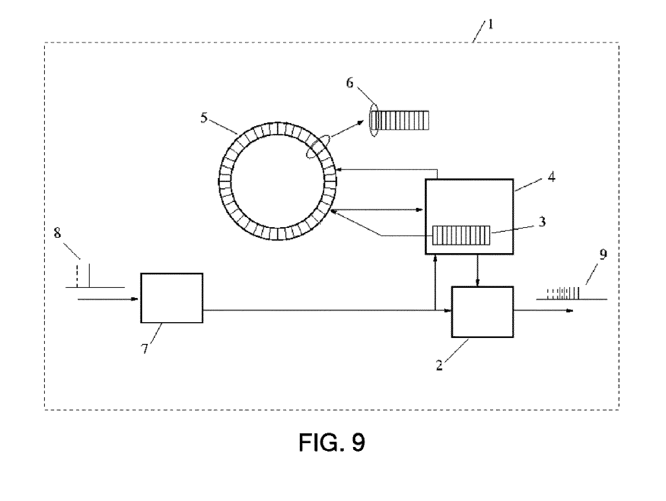

Figure 9 shows the structure of the Event Scheduler according to the present invention.

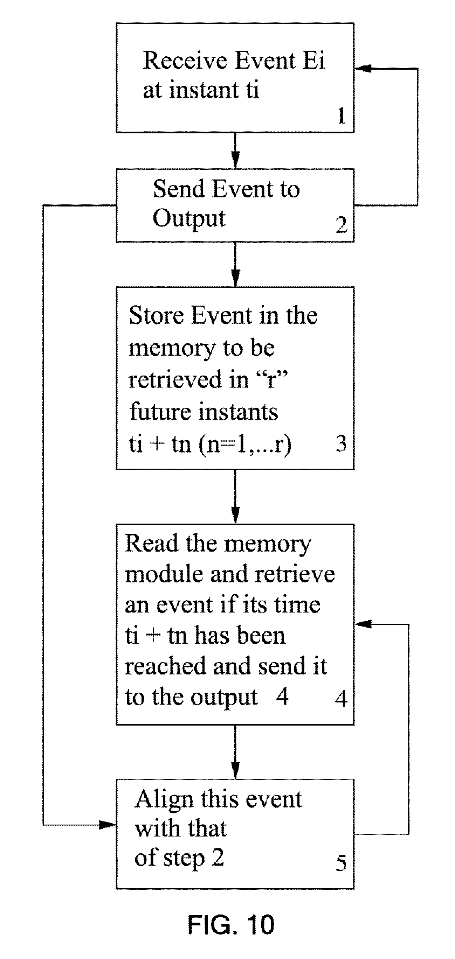

Figure 10 shows a flow chart detailing the steps of the method of the present invention.

### EMBODIMENT OF THE INVENTION

The present invention falls within the scope of an event-driven sensing and processing system such as that shown in figure 7, which shows a schematic view of an Address Event Representation (AER) system. As mentioned in the preceding section, figure 6 illustrates the effect of the present invention on the input pulses received at neuron input. That is, each input pulse (52) is replaced by a train of "r" pulses (51) and the "weight" value is also attenuated by a value in the vicinity of "r" (the exact value is optimised for each specific application), so that a waveform such as that shown in figure 5b) is modified by the present invention, giving rise to a waveform such as that shown in figure 6A. The "r" pulses are spaced apart in order for the pulse train to have a duration similar to the duration of the ramps in Fig. 6. This duration varies according to the application of the invention, but is typically a few milliseconds (1 or 2) or fractions of a millisecond. Similarly, the spacing of the "r" pulses may or may not be equidistant.

The event-driven sensing and processing system shown in figure 7 is formed by one or more sensors, in this case an AER vision (55), sets of event processor modules (56, 57, 58) (containing blocks I ia or 11b) and AER channels or buses (59, 60, 61) that send the events from one module to another. The events Ei are normally formed by a digital word containing the coordinates (x;, y,) of the neuron producing the event plus a bit with a sign s¡. Therefore, Ei = (XÍ, y, ,s¡) and each event contains p=3 parameters. But, in general, the information transported by a pulse or event Ei could be any other data set of "p" parameters, in accordance with the design of the AER system. The time t, in which the event occurs, is the characteristic time of the event Ei. Whenever an event Ei reaches a destination module (56, 57 or 58), it sends it to a "projective field" of neurons (x" y¡) in the modules of the destination layer. Thus, for example, if it is a convolutionary module (or feature map), whenever the event Ei is sent to a neuron "f of the projective field", it is assigned a weight that depends on the distance dy between the coordinates (x_{;}, y,)y(x,, y¡).

Figure 8A shows a typical internal structure of these modules. The destination module (feature map extractor in AER systems) (I ia) contains two blocks (12, 13). An Event Router block (12) and a Neuron Array block (13) block. The Event Router block (12) receives the input event Ei of the source module (10) and sends it to the set of neurons of the "projective field" in the Neuron Array (13) to each with its corresponding weight dy. These weights are stored within the Neuron Array block (13). The Neuron Array block (13) is usually a two-dimensional neuron array. Each neuron could be described by the diagram shown in figure 4. In the diagram shown in figure 8A, the events add their contribution instantaneously to the destination neurons as they arrive, as shown in figure 5.

Contrarily, the present invention inserts a block in each AER processor module, which we will call Event Scheduler (1), between the AER input channel and the block that distributes the events to the Event Router neuron array (12). Therefore, a new feature map extractor (11b) is obtained, comprising the Event Scheduler (1) of the present invention, a conventional Event Router (12) and a Neuron Array block (13) modified to offset the effect of Event Scheduler on the weights of the events. The function of the Event Scheduler (1) is as follows: for each input event Ei received at an instant t¡, the Event Scheduler (1) repeats the same event in "r" future instants t, + tₙ with n = 1, 2, ... r. The present invention adds new functionality to Neuron Array block (13), that of readapting the original weights diⱼ (i.e. attenuation), because now every input event is mapped to r +1 events destined to each of the neurons of the projective fields.

Figure 9 shows an embodiment of the Event Scheduler (1). This Event Scheduler (1) comprises the following elements: an Input Event Manager (7) that receives the events (8) of the corresponding AER input channel; a memory module, which in this example is a circular register of Q records (5); a finite state machine (FSM) (4) containing a log "pointer" (3); and an Output Event Arbiter (2) that sends events (9) to the Event Router block (12).

The finite state machine (4) contains a "pointer" register (3) whose index points to a position of the memory module (5). The index increases continuously every time step Δí̈ to point to the next position of the memory module (5). In the memory module (5), each memory position contains a "busy" bit (6) plus other bits to house the parameters inherent to a given event Ei. Whenever the Input Event Manager (7) receives a new event Ei at an instant t¡, it sends it to the Output Event Arbiter (2) to send it to the output, but additionally the FSM (4) copies its parameters to "r" positions of the memory module (5) so that the "pointer" (3) read the positions in future instants ti + tₙ with n = 1, 2,. .. r. Likewise, in these positions the "busy" bit (6) is activated. If a memory position to which we wish to write an event Ei is already busy, the event Ei will be written to the next (or previous) available position whose "busy" bit is not activated.

At the same time, the FSM (4) reads the register to which the "pointer" points (3) and, if its "busy" bit is activated, reads the event Ei, deactivates the "busy" bit (6), and sends the parameters Ei to the Output Event Arbiter (2).

The number Q of memory positions of the memory module (5) must be adequately dimensioned in accordance with the "r" parameter, the maximum rate of input events pₘₐₓ, the time step At and the maximum future instant t_{n.}. Thus, as at each moment the memory module of Q positions must store information until a future time tₙ, it must be fulfilled that: Q^{■} At = tₙ. Furthermore, if for a time tₙ events were to reach the maximum rate pₘₐₓ, the register would be able to contain pₘₐₓ r-tₙ events. Therefore, it must be fulfilled that Q > pₘₐₓ- r-tₙ. Or, equivalently, it must be verified that pₘₐₓ- r -At≤ 1.

The detail of the method described above with the components described in the embodiment of figure 9 is as follows:
i) for each input event E (8) that is received in the Input Event Manager (7) at an instant "t", the "p" values of their parameters are stored in a memory module (for example, a circular register of Q records in figure 9), to be retrieved in a finite number of "r" future instants t, + tₙ (n = l, 2, ..., r);
ii) whenever an input event E is received (8), additionally send the event to your destination, i.e. the Output Event Arbiter (2) (regardless of the storage process of the next step) which, upon arbitrating it with the stored events that can be sent by the FSM (4), it will send it to the Event Router block (12) through the Output Event Arbiter (2) output (9);
the "p" parameters of the input event E (8) are written in "r" positions of a memory module by the FSM (4); the positions of this memory module are read one by one at a constant speed, depending on the future instants t, + pₙ(n = I, 2, ... r) in which you we wish to retrieve the "r" repetitions of the event and must therefore have to select the "r" positions in the memory module. If the "busy" bit of a memory position is activated, the event will be written in the nearest previous or subsequent position whose "busy" bit is deactivated. The "busy" bit of the memory position where the event is written will become activated;
read the positions of the memory module one by one and, in those where one of the "r" repetitions of an event is stored, retrieve its "p" parameters. The FSM (4) reads the consecutive positions of the memory module with time steps At. If their "busy" bit is activated, the "p" parameters of the stored event are extracted and sent to the Arbiter (2). Whenever one of the "r" repetitions of an event stored in the past is extracted, the Arbiter (2) will arbitrate the events from the FSM (4) with those from the Input Event Manager (7) that coincide in time; and
weaken the weights in the destination module, reprogramming it with the values of the weakened weights, so that the effect of replacing each original event by a finite number "r" of events is equivalent. The destination module is the Neuron Array (13), which attenuates the weights by a factor in the vicinity of "r".

## Claims

1. A method for converting a pulsed-processing neural network with instantaneous integration synapses into dynamic integration synapses, **characterised in that** each pulse or input event Ei received in an instant "t" in a pulsed-processing system, said pulse or input event Ei is repeated future "r" instants while the effect of said pulse or event is attenuated by a destination module.

2. A method, according to claim 1, **characterised in that** it comprises the following steps:
i) for each event or input pulse received in an instant "t", memorise the values of "p" parameters associated with each event or pulse to be retrieved in a finite number "r" of future instants t,+tn (n = l, 2, ... r);
ii) for each event or input pulse received, additionally send the event or pulse to its destination;
iii) write the parameters of the event or pulse received to "r" positions of a memory module; the positions of this memory module are read one by one at a constant speed, depending on the future instants ti+tn in which we wish to retrieve the "r" repetitions of the event or pulse;
iv) retrieve, in a time-controlled manner, the "p" parameters of the event or pulse in the finite number "r" of future instants, wherein the fixed timing intervals are fixed or variable;
v) extract the event in one of the future "r" instants; arbitrate, by means of an Arbiter, the dispatch of the event retrieved from the memory by sending a new event that is being received at the same instant of time ti; and
vi) weaken the weights in the destination module, reprogramming it with the values of the weakened weights, so that the effect of replacing each original event by a finite number "r" of events is equivalent.

3. An Event Scheduler block (1) to convert a neural pulsed-processing neural network with instantaneous integration synapses into dynamic integration synapses, said Event Scheduler Block is connectable at output with an Event Router block (12) and at input with a source module (10) that sends a stream of pulses or events Ei; the Event Scheduler Bock (1) is **characterised in that** it comprises:
• a memory module (5);
• an Output Event Arbiter (2);
• a Finite State Machine (FSM) (4) comprising a pointer register (3), where the finite state machine (4) writes the "p" parameters of the event, received at an instant "t", to the memory module (5) to be sent to the Output Event Arbiter (2) in "r" future time instants; and
• an Input Event Manager (7) that sends the event directly to the Output Event Arbiter (2) and, simultaneously, to the finite state machine (4), in such a manner that the Output Event Arbiter (2) generates a signal which is the result of arbitrating each input event or pulse and the event or impulse retrieved from the finite state machine (4), said signal being sent to a Neuron Array (13), where it is attenuated by a factor in the vicinity of "r", via the Event Router (12).

4. An Event Scheduler block (1), according to claim 3, **characterised in that** the finite state machine (4) comprises a pointer register (3) whose index points to a memory module position (5), said index increasing by one position after a time unit increase time At.

5. An Event Scheduler block (1), according to any one of claims 3 to 4, **characterised in that** the memory module (5) is a circular record of Q records comprising a predetermined number of Q positions, each of which comprises a "busy" bit (6) and having storage capacity for the "p" parameters of the event.

6. An Event Scheduler block (1) according to claim 1, **characterised in that** the finite state machine (4), prior to writing the "p" parameters of the event in one of the "r" positions of the memory module, each of the which will be read at an instant tt+tn, detects whether the "busy" bit (6) is activated, in which case the "p" parameters of the event will be written to the next or previous position of the memory module (5) whose "busy" bit (6) is deactivated; otherwise, the "p" parameters of the event will be written in the position of the memory module (5) that will be read at the instant t,+tn and the "busy" bit (6) of said memory position is activated.

7. An Event Scheduler block (1), according to any one of claims 3 to 6, **characterised in that** the finite state machine (4), for the time instant "t", reads the "p" parameters of the event comprised in the position of the memory module (5) pointed to by the index register pointer (3) if the "busy" bit (6) is activated, deactivates said "busy" bit (6) and sends said "p" parameters to the Output Event Arbiter (2).

8. An Event Scheduler block (1), according to any one of claims 3 to 7, **characterised in that** the Finite State Machine (FSM) (4) writes the "p" parameters of the event (changing its polarity) to the memory module (5) in order to send them to the Output Event Arbiter (2) in "r2" future time instants subsequent to the "r" time instants.

9. Feature Map extractor (11 B) connectable at input to a source module (10) from which it receives pulses or events Ei; said Feature Map extractor (11 B) comprises an Event Router block (12); the Feature Map extractor (11 B) is **characterised in that** it additionally comprises the Event Scheduler block (1) defined in any one of claims 1 to 5 and a modified block Neuron Array block (13).

10. Feature Map extractor (11 B), according to claim 9, **characterised in that** in the modified Neuron Array block (13) the weights are weakened such that the effect of replacing each original event by a finite number "r" of events from the Event Scheduler block is equivalent.
